# EUROPEAN PATENT APPLICATION

(11) **EP 4 579 917 A1**
(43) Date of publication of application: **02.07.2025**
(21) Application number: 23894972.1
(22) Date of filing: 20.11.2023
(51) Int. Cl.: H01M 50/367, H01M 50/211

(54) **BATTERY PACK AND DEVICE INCLUDING SAME**

(30) Priority: 23.11.2022 KR 20220158755
(71) Applicant: LG Energy Solution, Ltd., Seoul 07335 (KR)
(72) Inventor: MIN, Jinki, Daejeon 34122 (KR); KIM, Seho, Daejeon 34122 (KR); YIM, Sangwook, Daejeon 34122 (KR)
(74) Representative: Plasseraud IP
(86) International application number: PCT/KR2023/018701
(87) International publication number: WO 2024/112044

(57) **Abstract**

The present disclosure includes a battery pack and a device including the same. The battery pack according to one embodiment of the present disclosure comprises at least one or more battery modules that includes a battery cell stack in which a plurality of battery cells are stacked and a module frame that houses the battery cell stack; a first pack frame on which the battery module is mounted; a second pack frame located while covering the battery module; and a venting part provided on one surface of the first pack frame, wherein the venting part communicates with a venting path that is formed by a plurality of partition members located on the first pack frame.

## Description

### [TECHNICAL FIELD]

### Cross Citation with Related Application(s)

This application claims the benefit of Korean Patent Application No. 10-2022-0158755 filed on November 23, 2022 with the Korean Intellectual Property Office, the disclosure of which is incorporated herein by reference in its entirety.

The present disclosure relates to a battery pack and a device including the same, and more particularly, to a battery pack with improved safety and a device including the same.

### [BACKGROUND]

As the technology development of and the demand for mobile devices have increased, the demand for secondary batteries as energy sources has rapidly increased. A variety of researches on batteries capable of meeting various needs have been carried out accordingly.

A secondary battery has attracted considerable attention as an energy source for power-driven devices, such as an electric bicycle, an electric vehicle, and a hybrid electric vehicle, as well as an energy source for mobile devices, such as a mobile phone, a digital camera, and a laptop computer.

In recent years, along with a continuous rise of the necessity for a large-capacity secondary battery structure, including the utilization of the secondary battery as an energy storage source, there is a growing demand for a battery pack of a multi-module structure which is an assembly of battery modules in which a plurality of secondary batteries are connected in series and/or in parallel.

Meanwhile, when a plurality of battery cells are connected in series or in parallel to configure a battery pack, it is common to configure a battery module composed of at least one battery cell first and then configure a battery pack by using at least one battery module and adding other components. Since battery cells constituting such a medium- or large-sized battery module are composed of secondary batteries which can be charged and discharged, such a high-output large-capacity secondary battery generates a large amount of heat during a charging and discharging process.

A plurality of the battery cells may be connected in series/parallel to form a battery pack. In this case, it is common to configure a battery module composed of at least one battery cell, and then configure a battery pack by using at least one battery module and adding other components. Since battery cells constituting such a medium- or large-sized battery module are composed of secondary batteries which can be charged and discharged, such a high-output large-capacity secondary battery generates a large amount of heat during a charging and discharging process, which may cause a thermal runaway phenomenon and thus generate venting gas or flame inside the battery.

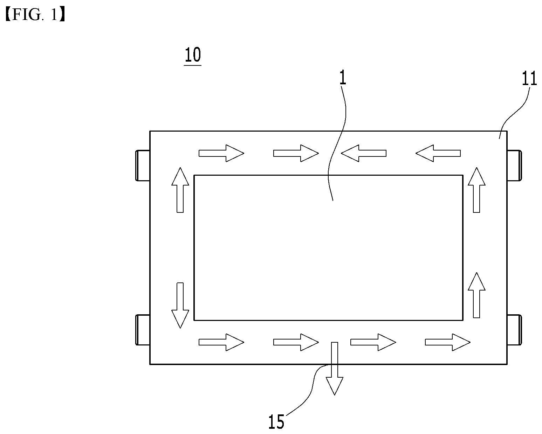

FIG. 1 is a diagram showing a venting path in a conventional battery pack.

Referring to FIG. 1, the battery pack 10 is provided with a venting part 15 that discharges venting gas or flame generated in the inside thereof to the outside. However, the venting gas or flame generated in a conventional battery module moves without directivity along the edge of the battery pack and then is discharged into the venting unit 15, and the holes constituting the venting part are easily clogged due to particles generated inside the battery, which causes an increase in internal pressure. Therefore, the battery pack structure cannot withstand the internal pressure and collapses, and the flame is exposed to the outside, which causes rapid transition between battery modules. Thus, there is a need to solve these problems.

### [DETAILED DESCRIPTION OF THE INVENTION]

### [Technical Problem]

It is an object of the present disclosure to provide a battery pack with improved safety and durability, and a device including the same.

However, the technical problems to be solved by embodiments of the present disclosure are not limited to the above-described problems, and can be variously expanded within the scope of the technical idea included in the present disclosure.

### [Technical Solution]

According to one embodiment of the present disclosure, there is provided a battery pack comprising: at least one or more battery modules that includes a battery cell stack in which a plurality of battery cells are stacked and a module frame that houses the battery cell stack; a first pack frame on which the battery module is mounted; a second pack frame located while covering the battery module; and a venting part provided on one surface of the first pack frame, wherein the venting part communicates with a venting path that is formed by a plurality of partition members located on the first pack frame.

The first pack frame includes a side frame that protrudes from the bottom surface of the first pack frame toward the second pack frame along an edge of the first pack frame, and the plurality of partition members may be located between the battery module and the side frame.

The plurality of partition members are located correspondingly between the first side surface of the battery module and the first side frame facing the first side surface, and between the second side surface of the battery module and the second side frame facing the second side surface, respectively, and the first side surface and the second side surface may be both side surfaces of the battery cell stack that face each other along the stacking direction of the battery cell stack.

The partition member may be located in parallel with the first side surface and the second side surface of the battery module, and the first side frame and the second side frame.

One end of the one partition member may be in contact with a third side frame, which is one side frame perpendicular to the first side frame and the second side frame, and the other end of the partition member adjacent to the one partition member may be in contact with a fourth side frame, which is the remaining side frame facing the third side frame.

The plurality of partition members may be alternately located between the battery module and the first side, and between the battery module and the second side frame, respectively.

The plurality of partition members may form a zigzag shaped venting path.

In the battery pack according to another embodiment of the present disclosure, the partition member includes a recessed part in which one region of the first surface facing the second pack frame and the second and third surfaces perpendicular to the first surface is recessed.

A filler member is located in the recessed part, the width of the filler member corresponds to the distance between the second surface and the third surface of the partition member, and the height of the filler member may correspond to the vertical distance between the first surface and the recessed part.

The filler member may include at least one or more holes penetrating through one surface of the filler member parallel to the second surface of the partition member, and the other surface of the filler member parallel to the third surface of the partition member.

The filler member may have a hollow shape.

The filler member may be a thermoplastic material.

The second pack frame and the partition member are coupled and fixed by a coupling member, and the coupling member penetrates through the second pack frame, and may be inserted into a coupling part, which is a groove provided on one surface of the partition member facing the second pack frame.

The battery pack according to according to yet another embodiment of the present disclosure further comprises a sealing member interposed between the partition member and the second pack frame.

According to according to yet another embodiment of the present disclosure, there is provided a device comprising the above-mentioned battery pack.

### [Advantageous Effects]

According to the embodiments, it is possible to improve the safety and durability of a battery pack by setting a venting path inside the battery pack.

Effects obtainable from the present disclosure are not limited to the effects mentioned above, and additional other effects not mentioned herein will be clearly understood from the description and the appended drawings by those skilled in the art.

### [BRIEF DESCRIPTION OF THE DRAWINGS]

FIG. 1 is a diagram showing a venting path in a conventional battery pack.
FIG. 2 is a perspective view of a battery pack according to an embodiment of the present disclosure.
FIG. 3 is an exploded perspective view of a battery pack according to an embodiment of the present disclosure.
FIG. 4 is a perspective view of the battery pack of FIG. 2 viewed from the -z-axis direction.
FIG. 5 is a diagram schematically showing a battery pack according to another embodiment of the present disclosure.
FIG. 6 is an enlarged view showing the first region of FIG. 5.
FIG. 7(a) is a perspective view of a filler member. FIG. 7(b) is a cross-sectional view taken along line B-B' of FIG. 7(a). FIG. 7(c) is a diagram of the filler member viewed in the x-axis direction of FIG. 7(a). FIG. 7(d) is a diagram of the filler member viewed in the y-axis direction of FIG. 7(a).
FIG. 8 is a diagram showing a state in which the filler member of the present disclosure is coupled with the second pack frame.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

A description of portions that are not related to the description will be omitted for clarity, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

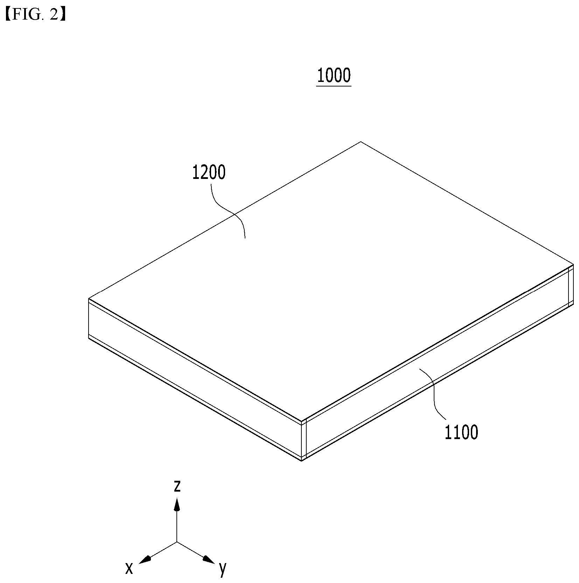

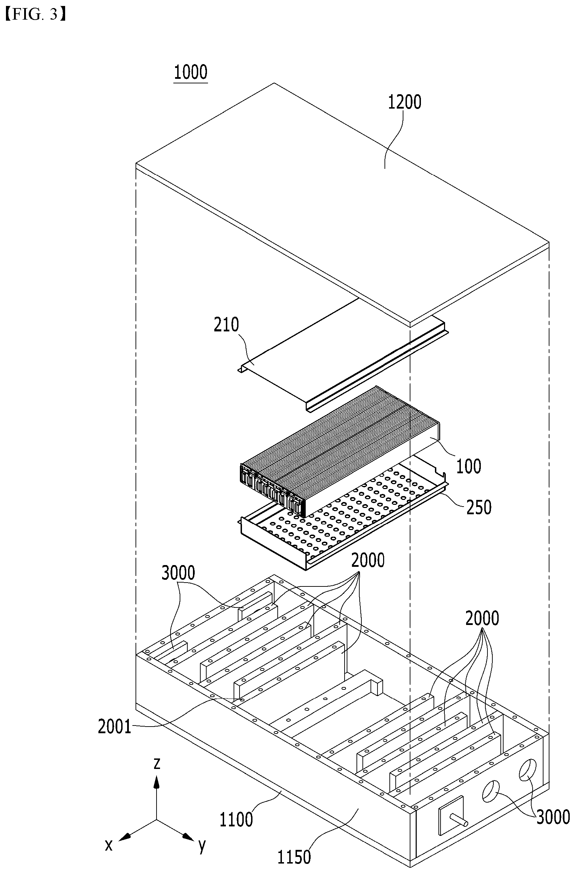

FIG. 2 is a perspective view of a battery pack according to an embodiment of the present disclosure. FIG. 3 is an exploded perspective view of a battery pack according to an embodiment of the present disclosure.

Referring to FIGS. 2 and 3, the battery pack 1000 according to the present embodiment includes at least one or more battery modules 100 housed inside the battery pack frames 1100 and 1200, a partition member 2000 located inside the battery pack frames 1100 and 1200, and a venting part 3000 provided on one surface of the battery pack frame.

The battery pack frame includes a first pack frame 1100 on which the battery module 100 is mounted. and a second pack frame 1200 located while covering the battery module 100.

Specifically, at least one or more battery modules 100 may be mounted on the bottom surface of the first pack frame 1100. The first pack frame 1100 includes a side frame 1150 that protrudes from the bottom surface toward the second pack frame 1200.

The side frame 1150 may protrude toward the second pack frame 1200 along the edge of the bottom surface of the first pack frame 1100. More specifically, the side frame 1150 may protrude toward the second pack frame 1200 along the respective corners of the bottom surface of the first pack frame 1100. Here, the upper surface (z-axis direction) of the side frame 1150 may be in contact with the second pack frame 1200. At this time, the upper surface of the side frame 1150 and the second pack frame 1200 may be coupled to each other by a method such as welding to seal the inside of the battery pack 1000. Further, the side frame 1150 surrounds the plurality of battery modules 100, and can protect the battery modules 100 from external impact.

The second pack frame 1200 is located while covering the battery module 100, and an edge of the second pack frame 1200 is located while being in contact with the side frame 1150.

That is, the first pack frame 1100 and the second pack frame 1200 can be coupled to each other by a method such as welding to seal the inside of the battery pack 1000.

The battery module 100 may include a battery cell stack 120 in which a plurality of battery cells are stacked along a preset direction, and module frames 210 and 250. The module frames 210 and 250 may include an upper frame 210 and a lower frame 250, and the battery cell stack 120 may be mounted between the upper frame 210 and the lower frame 250 to configure the battery module 100. However, the module frames 210 and 250 are not limited to the contents described above, and may be a mono frame in the form of metal plates whose upper and lower surfaces and both side surfaces are integrated.

Here, the battery cell may be a pouch type secondary battery or a prismatic secondary battery because the type thereof is not particularly limited. However, the pouch type secondary battery is preferred.

The partition member 2000 may be formed in plural numbers, i.e., in at least two or more numbers. In this figure, it is shown that five partition members 2000 are respectively formed with the battery module 100 interposed therebetween, but this is for illustrative purposes and is not limited thereto. For example, the number of the partition members 2000 may be greater or less than those shown in this figure.

The partition member 2000 may be provided in the first pack frame 1100. Specifically, the partition member 2000 may be located on the first pack frame 1100 to form a venting path that discharges venting gas and flame generated from the battery module 100.

The partition member 2000 may have a shape that protrudes from the bottom surface of the first pack frame 1100 toward the second pack frame 1200. In this case, the height of the partition member 2000 may be equal to or smaller than the height of the side frame 1150, wherein the height means the distance between the bottom surface of the first pack frame 1100 and the second pack frame 1200.

The partition member 2000 is an individual metal plate, which may be located on the first pack frame 1100, so that it can be coupled with the first pack frame 1100 by a method such as welding, or it can also be in the form injection-molded together with the first pack frame 1100.

The plurality of partition members 2000 may include a coupling part 2001 located on one surface facing the second pack frame 1200. The coupling part 2001 is a groove located on one surface of the partition member 2000, and can perform a function of coupling and securing the partition member 2000 to the second pack frame 1200 by a coupling member. At this time, the coupling member may be, for example, a bolt.

The venting part 3000 communicates with the venting path formed by the partition member 2000, and can discharge venting gas that has moved through the venting path, to the outside. The venting part 3000 may be provided on one surface of the first pack frame 1100, and specifically, the venting part 3000 may be provided on one surface of the side frame 1150.

The venting part 3000 may be at least one or more holes penetrating through the first pack frame 1100. That is, the venting part 3000 may be at least one or more holes penetrating through the side frame 1150. In this case, the venting part 3000 may be configured to include a filter that discharges only the venting gas to the outside and prevents moisture or dust from the outside from flowing into the battery pack, or it may be a rupture disk that breaks due to internal pressure. However, the venting part 3000 is not limited to the above structure, and can be used without limitation as long as it has a structure that can discharge the gas inside the battery pack to the outside.

Next, the partition member 2000, the venting path or the like formed thereby will be described in more detail.

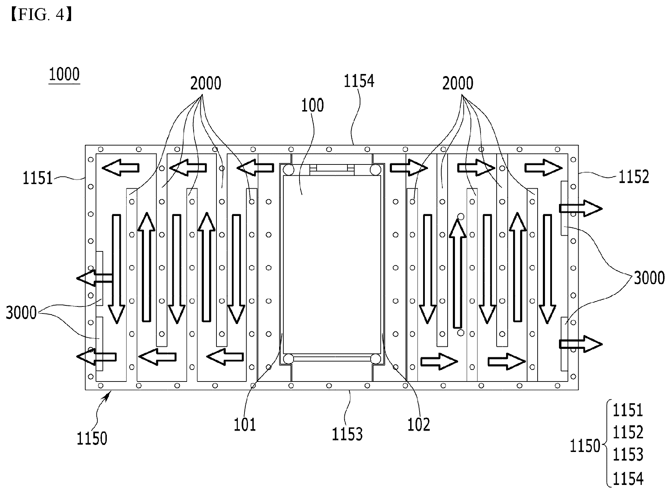

FIG. 4 is a perspective view of the battery pack of FIG. 2 viewed from the -z-axis direction.

Referring to FIG. 4, a plurality of partition members 2000 may be provided to correspond to each other with the battery module 100 interposed therebetween.

The plurality of partition members 2000 may be located correspondingly between one side surface of the battery module 100 and the side frame 1150, and between the other side surface of the battery module 100 and the side frame 1150. More specifically, the plurality of partition members 2000 may be located correspondingly between the first side surface 101 and the first side frame 1151 of the battery module 100, and between the second side surface 102 and the second side frame 1152 of the battery module 100.

Here, the first side surface 101 and the second side surface 102 of the battery module 100 refer to both side surfaces of the battery cell stack 120 facing along the stacking direction of the battery cell stack 120. And, the first side frame 1151 refers to the side frame 1150 facing the first side surface 101, the second side frame 1152 refers to the side frame 1150 facing the first side surface 102, and the first side frame 1151 and the second side frame 1152 may be side frames 1150 facing each other. At this time, the plurality of partition members 2000 are located in parallel with the first side surface 101 and the second side surface 102 of the battery module 100, and the first side frame 1151 and the second side frame 1152.

One end of one partition member 2000 may be in contact with a third side frame 1153, which is a side frame perpendicular to the first side frame 1151 and the second side frame 1152. The other end of another partition member 2000 adjacent to the one partition member 2000 may be located while being in contact with the fourth side frame 1154, which is the remaining side frame facing the third side frame 1153. As described above, a plurality of partition members 2000 may be alternately located between the battery module 100 and the side frame 1150, whereby the venting path formed by the partition member 2000 may have a zigzag shape. This is to set the venting path in a zigzag shape so that the width of the venting path is narrow but the length increases, because it is difficult to extend the path in the longitudinal direction in a battery pack having a constant area.

The venting part 3000 may be formed on one surface of the pack frame where the venting path ends. For example, the venting unit 3000 may be located at the first side frame 1151 and the second side frame 1152, which is the side frame 1150 where the venting path ends. The venting part 3000 may be provided in plural numbers, and at least one or more venting part 3000 may be provided on each of the first side frame 1151 and the second side frame 1152.

As described above, as a plurality of partition members 2000 are provided, a complicated venting path having a zigzag shape is realized, so that high-temperature gas generated from the battery module 100 can be cooled while moving through the venting path, and discharged to the outside. Specifically, this is because the time required for high-temperature gas to cool while passing through a longer vent path than before is increased, and the degree of cooling is improved while colliding with the partition member 2000.

Furthermore, when high-temperature particles generated from the battery module 100 move along the venting path, the particles are dispersed and evenly stacked on the venting path, and thus may not be transported to the venting unit 3000, or even if the particles are transported, the time required for the particles to clog the venting part 3000 can be delayed. That is, unlike the conventional case, the particles do not clog the holes in the venting part, or even if the particles clog, they do so more slowly than before, thereby making it possible to prevent an increase in the internal pressure of the battery pack.

Further, even if a flame occurs, the complexity of the vent path prevents the flame from directly exiting to the outside, and the effect of cooling or filtering the flam can be exhibited by the zigzag corner part.

In summary, high-temperature gases, particles, and flames move along the venting path while being bent from 90 degrees to 180 degrees, whereby the high-temperature gas and flame are partially cooled, and the particles are dispersed and located in the venting path. Therefore, even if a high pressure inside the battery pack is maintained, the structure of the battery pack does not collapse until the battery module burns out, and no flame is generated on the outside of the battery pack, thereby improving safety.

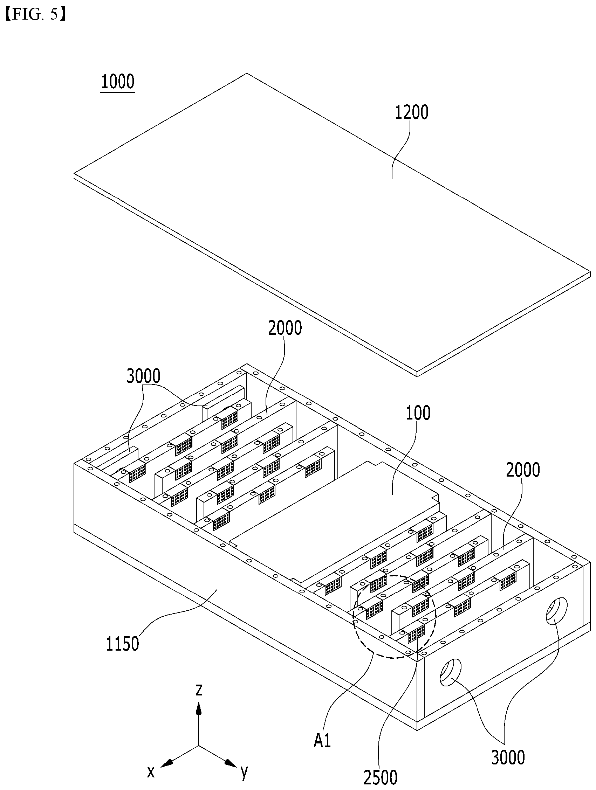

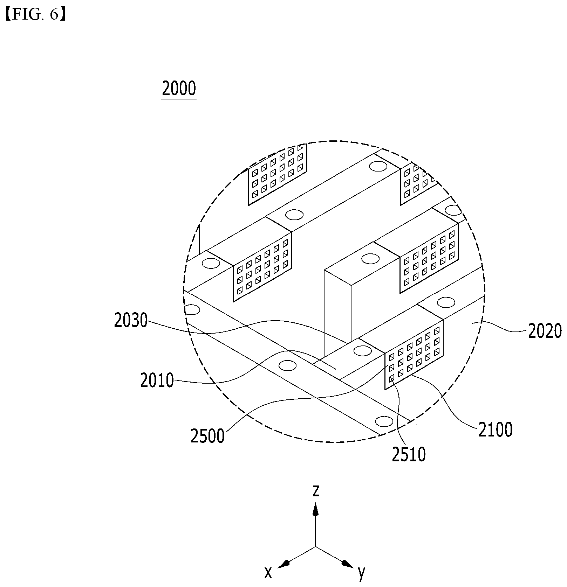

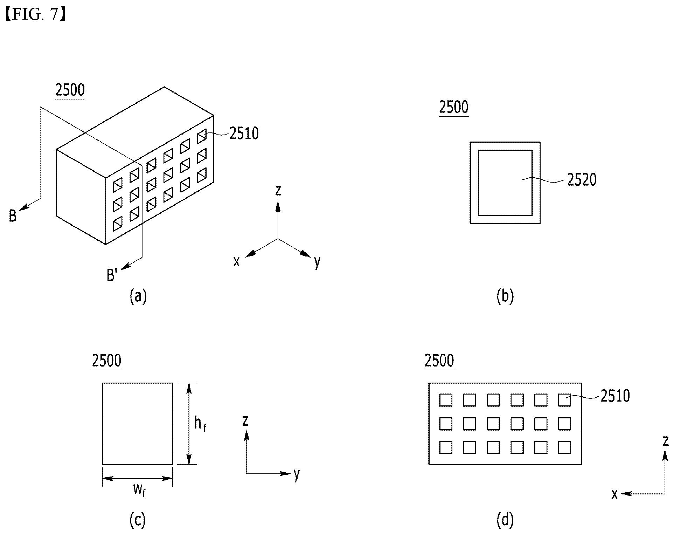

FIG. 5 is a diagram schematically showing a battery pack according to another embodiment of the present disclosure. FIG. 6 is an enlarged view showing the first region of FIG. 5. FIG. 7(a) is a perspective view of a filler member. FIG. 7(b) is a cross-sectional view taken along line B-B' of FIG. 7(a). FIG. 7(c) is a diagram of the filler member viewed in the x-axis direction of FIG. 7(a). FIG. 7(d) is a diagram of the filler member viewed in the y-axis direction of FIG. 7(a).

The battery pack illustrated in FIGS. 5 to 7 is a modification of an embodiment of the present disclosure illustrated in FIGS. 2 to 4, and a detailed description of the same configuration as those described above will be omitted.

Referring to FIGS. 5 and 6, the battery pack 1000 according to another embodiment includes a filler member 2500 located in the recessed part 2100 provided in the partition member 2000.

The partition member 2000 includes a recessed part 2100 in which one surface facing the second pack frame 1200 is recessed. The recessed part 2100 may be a part in which one region of one surface facing the second pack frame 1200 and both side surface perpendicular to the one surface is recessed. Specifically, the recessed part 2100 may be a part in which one region of a first surface 2010 facing the second pack frame 1200, and a second surface 2020 and a third surface 2030 perpendicular to the first surface 2010 is recessed.

A plurality of recessed parts 2100 may be located spaced apart from each other in one partition member 2000, and a filler member 2500 may be located in the recessed part 2100. The filler member 2500 may be located while filling the recessed part 2100.

Referring to FIGS. 6, 7(a) and 7(d), the filler member 2500 may include at least one or more holes 2510 penetrating through the filler member 2500. Specifically, a plurality of holes 2510 are provided on one surface of the filler member 2500 parallel to the second surface 2020 and the third surface 2030 of the partition member 2000 and on the other surface opposite thereto. That is, the hole 2510 is formed while penetrating through one surface and the other surface of the filler member 2500.

In this case, the high-temperature gas moving along the venting path can move more flexibly to the adjacent venting path through the hole 2510 of the filler member 2500, and be discharged to the outside more quickly. Thereby, the internal pressure of the battery pack 1000 is reduced, thereby capable of preventing collapse or breakage of the partition member 2000.

Referring to FIG. 7(b), the filler member 2500 may have a hollow shape, and have a shape being hollow inside thereof. Therefore, when high-temperature gas or flame flows into the filler member 2500 through the hole 2510, high-temperature gas or flame can cool down while remaining in the hollow region of the filler member 2500 for a while. Alternatively, when high-temperature particles flow into the filler member 2500 through the hole 2510, the particles are trapped in the hollow region of the filler member 2500, and cannot exit the venting path, thereby preventing particles from clogging the venting part 3000.

Referring to FIGS. 6 and 7(c), the width (w_{f}) of the filler member 2500 may correspond to the distance between the second surface 2020 and the third surface 2030 of the partition member 2000, and the height (h_{f}) of the filler member 2500 may correspond to the vertical distance between the first surface 2010 and the recessed part 2100. Therefore, the shape of the recessed part 2100 and the outer shape of the filler member 2500 may correspond.

In this figure, the recessed part 2100 and the filler member 2500 are shown in the shape of a rectangular parallelepiped, but the shape is not limited thereto, and any shape is possible as long as the partition member 2000 is partially dug down.

The filler member 2500 may be formed of a material that melts at high temperature. Specifically, the filler member 2500 may be a thermoplastic material, such as silicon (Si). The filler member 2500 may be inserted and located into the recessed part 2100 after plastic injection, or may be formed by being insert-molded together with the partition member 2000.

The filler member 2500 is melted by heat when a high-temperature flame is generated, and an open area corresponding to the recessed part 2100 may remain in the partition member 2000. In this case, the filler member 2500 melted by heat acts as a resistance to the heat source and can cool the temperature inside the battery pack 1000. Moreover, as the filler member 2500 melts, more high-temperature gas or flame may move to the adjacent venting path and be discharged to the outside. Thereby, the pressure inside the battery pack 1000 can be lowered, thereby preventing collapse or breakage of the partition member 2000.

That is, compared to only the partition member 2000 being located in the battery pack 10000, the filler member 2500 is located in the recessed part 2100, whereby durability against pressure inside the battery pack 1000 is improved, thereby preventing structural collapse of the battery pack 1000. Therefore, the safety of the battery can be improved.

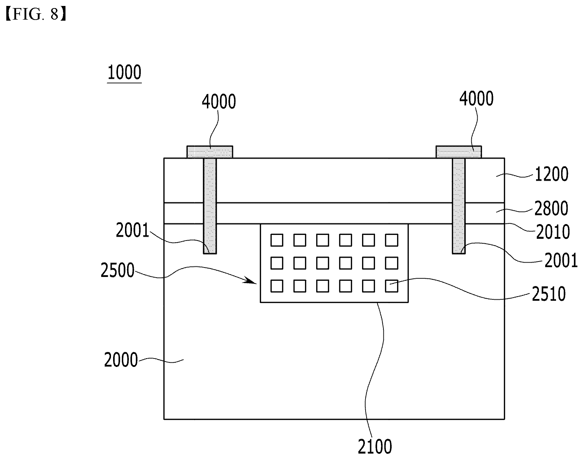

FIG. 8 is a diagram showing a state in which the filler member of the present disclosure is coupled with the second pack frame.

Referring to FIG. 8, the filler member 2500 is located in the recessed part 2100 of the partition member 2000, wherein the surface of the filler member 2500 facing the second pack frame 1200 may be located on the same line as the first surface 2010 of the partition member 2000.

The partition member 2000 and the second pack frame 1200 may be coupled and fixed to each other by the coupling member 4000. Specifically, the coupling member 4000 can be coupled and fixed by being inserted into the coupling part 2001 of the partition member 2000 while penetrating through the second pack frame 1200.

A sealing member 2800 may be interposed between the partition member 2000 and the second pack frame 1200. That is, the sealing member 2800 may be interposed while covering the first surface 2010 of the partition member 2000 and one surface of the filler member 2500 facing the second pack frame 1200. In this case, the coupling member 4000 can be coupled and fixed by being inserted into the coupling part 2001 while penetrating not only the second pack frame 1200 but also the sealing member 2800.

The sealing member 2800 may fill the gap between the second pack frame 1200 and the partition member 2000. In other words, the sealing member 2800 can fill the assembly tolerance that arises when the coupling member 4000 penetrates through the second pack frame 1200. Further, although not shown in this figure, the sealing member 2800 may also be interposed between the second pack frame 1200 and the side frame 1150. That is, the sealing member 2800 can fill the gap between the second pack frame 1200 and the partition member 2000, or between the second pack frame 1200 and the side frame 1150, thereby capable of preventing moisture, dust or the like from flowing into the battery pack from the outside. Therefore, the waterproof and dustproof performance of the battery can be improved, and the safety of the battery can be improved.

The sealing member 2800 may be a material having adhesive force. Further, the sealing member 2800 may be a material that can be applied using a dispensing type. In one example, the sealing member 2800 may be made of silicon (Si).

Therefore, since the sealing member 2800 is interposed, the partition member 2000 and the filler member 2500, or the side frame 1150 can be more firmly coupled to the second pack frame 1200, thereby improving the durability of the battery pack. Further, since the sealing member 2800 can be simply applied using a dispensing type, process efficiency can be improved.

The above-mentioned battery pack can be applied to various devices. Such devices can be applied to vehicle means such as an electric bike, an electric vehicle, and a hybrid electric vehicle, but the present disclosure is not limited thereto, and also can be applied to various devices capable of using the battery module and the battery pack including the same, which falls within the scope of the present disclosure.

Although the invention has been described in detail above with reference to preferred embodiments thereof, it will be appreciated by those skilled in the art that the scope of the present disclosure is not limited thereto, and various modifications and improvements can be made in these embodiment without departing from the principles and sprit of the invention, the scope of which is defined in the appended claims and their equivalents.

### [Description of Reference Numerals]

- 100:: battery module
- 1000:: battery pack
- 1100:: first pack frame
- 1150:: side frame
- 1200:: second pack frame
- 2000:: partition member
- 500:: filler member
- 800:: sealing member
- 3000:: venting part
- 4000:: coupling member

## Claims

1. A battery pack comprising:
at least one or more battery modules that includes a battery cell stack in which a plurality of battery cells are stacked and a module frame that houses the battery cell stack;
a first pack frame on which the battery module is mounted;
a second pack frame located while covering the battery module; and
a venting part provided on one surface of the first pack frame,
wherein the venting part communicates with a venting path that is formed by a plurality of partition members located on the first pack frame.

2. The battery pack according to claim 1, wherein:
the first pack frame includes a side frame that protrudes from a bottom surface of the first pack frame toward the second pack frame along an edge of the first pack frame, and
the plurality of partition members are located between the battery module and the side frame.

3. The battery pack according to claim 2, wherein:
the plurality of partition members are located correspondingly between a first side surface of the battery module and a first side frame facing the first side surface, and between a second side surface of the battery module and a second side frame facing the second side surface, respectively, and
the first side surface and the second side surface are both side surfaces of the battery cell stack that face each other along a stacking direction of the battery cell stack.

4. The battery pack according to claim 3, wherein:
the partition member is located in parallel with the first side surface and the second side surface of the battery module, and the first side frame and the second side frame.

5. The battery pack according to claim 3, wherein:
one end of the one partition member is in contact with a third side frame, which is one side frame perpendicular to the first side frame and the second side frame, and
the other end of another partition member adjacent to the one partition member is in contact with a fourth side frame, which is the remaining side frame facing the third side frame.

6. The battery pack according to claim 5, wherein:
the plurality of partition members are alternately located between the battery module and the first side frame, and between the battery module and the second side frame, respectively.

7. The battery pack according to claim 6, wherein:
the plurality of partition members form a zigzag shaped venting path.

8. The battery pack according to claim 1, wherein:
the partition member includes a recessed part in which one region of a first surface of the partition member facing the second pack frame and a second surface and a third surface of the partition member perpendicular to the first surface is recessed.

9. The battery pack according to claim 8, wherein:
a filler member is located in the recessed part,
the width of the filler member corresponds to the distance between the second surface and the third surface of the partition member, and
the height of the filler member corresponds to the vertical distance between the first surface and the recessed part.

10. The battery pack according to claim 9, wherein:
the filler member includes at least one or more holes penetrating through one surface of the filler member parallel to the second surface of the partition member, and the other surface of the filler member parallel to the third surface of the partition member.

11. The battery pack according to claim 9, wherein:
the filler member has a hollow shape.

12. The battery pack according to claim 9, wherein:
the filler member is a thermoplastic material.

13. The battery pack according to claim 1, wherein:
the second pack frame and the partition member are coupled and fixed by a coupling member, and
the coupling member penetrates through the second pack frame, and is inserted into a coupling part, which is a groove provided on one surface of the partition member facing the second pack frame.

14. The battery pack according to claim 1,
further comprising a sealing member interposed between the partition member and the second pack frame.

15. A device comprising the battery pack according to claim 1.
